# EUROPÄISCHE PATENTSCHRIFT

(11) **EP 0 870 703 B1**
(45) Veröffentlichungstag und Bekanntmachung des Hinweises auf die Patenterteilung: **12.07.2000**
(21) Anmeldenummer: 98105984.3
(22) Anmeldetag: 01.04.1998
(51) Int. Cl.: B65G 39/04, B65G 13/06

(54) **Rollenantriebseinheit**
Roller-driving unit
Unité d'entraînement pour rouleaux

(30) Priorität: 11.04.1997 DE 19715180; 06.05.1997 DE 19719160
(43) Veröffentlichungstag der Anmeldung: 14.10.1998
(73) Patentinhaber: Telair International GmbH, 83734 Hausham (DE)
(72) Erfinder: Huber, Thomas, 82393 Iffeldorf (DE); Holzner, Richard, 84405 Dorfen (DE)
(74) Vertreter: Bohnenberger, Johannes, Dr.

(56) Entgegenhaltungen:
- DE-A- 4 102 424
- US-A- 3 698 539

## Beschreibung

Die vorliegende Erfindung betrifft eine Rollenantriebseinheit zum Antrieb von Gegenständen auf einer Förderbahn gemäß dem Oberbegriff des Anspruchs 1.

Derartige Rollenantriebseinheiten werden beispielsweise zum Transport von Frachtbehältern verwendet, die auf Rollenförderbahnen aufgesetzt sind. Solche Frachtbehälter können Frachtcontainer oder Frachtpaletten sein, wobei ein bevorzugtes Anwendungsgebiet der hier gezeigten Rollenantriebseinheit Frachtladesysteme im Luftfrachtverkehr sind, bei denen die Container in den Laderaum eines Flugzeuges hineingefahren und dort verstaut werden. Die Rollenantriebseinheit ist demzufolge im Flugzeug selbst installiert.

Beim Einschalten derartiger Rollenantriebseinheiten werden die dazugehörigen Rollen hochgeschwenkt, und zwar derart, daß sie sich an den Boden eines über ihnen befindlichen Frachtcontainers pressen. Durch diesen Reibschluß kann das Drehmoment der Antriebsrollen auf den Boden des Frachtcontainers übertragen werden und die Antriebsrollen befördern sie somit weiter.

Aufgrund des Einsatzgebietes tritt nun eine Vielzahl von Problemen bei der Konstruktion derartiger Rollenantriebseinheiten auf. Zum einen muß nämlich eine hinreichend hohe Anpreßkraft zwischen der Antriebsrolle und dem Boden des Containers erzeugt werden, andererseits soll die Anpreßkraft vom Drehmoment des Motors "abgezweigt" werden, so daß keine gesonderten Mittel zum Hochheben der Antriebsrolle notwendig sind. Hierbei muß die Rollenantriebseinheit kleinbauend und von geringem Gewicht sein. Da eine Vielzahl von derartigen Rollenantriebseinheiten gleichzeitig in einer Förderbahn Verwendung findet, muß die Zuverlässigkeit besonders hoch sein. Der Ausfall einer einzigen Rollenantriebseinheit kann zu einer Störung im Ladebetrieb führen.

Aus der DE 41 02 424 A1 ist eine solche Rollenantriebseinheit bekannt. Bei dieser Rollenantriebseinheit ist eine Antriebsrolle einstückig ausgebildet und drehbar an einem Rahmen gelagert. Die Antriebsrolle ist über eine Getriebeanordnung mit einem Elektromotor verbunden und kann mittels dieses Elektromotors gedreht werden. Die Drehachse der Antriebsrolle ist dabei senkrecht zu der Drehachse des Elektromotors angeordnet. Die Getriebeanordnung ist mittels eines Planetengetriebes realisiert, das einen Eingang und zwei Ausgänge aufweist. Der Eingang des Planetengetriebes ist mit dem Elektromotor, der erste Ausgang mit der Antriebsrolle und der zweite Ausgang mit einer Hubeinrichtung verbunden, mit der die Antriebsrolle von einer unteren Ruhestellung in eine obere Arbeitsstellung angehoben werden kann.

Insbesondere beim Anheben der Antriebsrolle und beim Transport des Frachtcontainers über die Antriebsrolle wird eine große Belastung auf die Hubeinrichtung und die Antriebsrolle ausgeübt, wobei die Rollenantriebseinheit anfällig macht.

Der vorliegenden Erfindung liegt daher die Aufgabe zurgrunde, eine Rollenantriebseinheit anzugeben, mit der ein zuverlässiger Betrieb der Förderbahn gewährleistet ist.

Diese Aufgabe wird durch die technische Lehre des Anspruchs 1 gelöst.

Gemäß der vorliegenden Erfindung weist die Rollenantriebseinheit eine Antriebsrolle auf, die sich im wesentlichen über die gesamte Breite des Rahmens erstreckt und in ihrer Mitte in zwei Teilantriebsrollen geteilt ist. In diesem mittleren Bereich der Antriebsrolle sind die beiden Teilantriebsrollen in einem Lager am Rahmen drehbar gehalten. Die Hubeinrichtung ist paarig ausgebildet, wobei sie symmetrisch zur Mitte der Antriebsrolle und zum Lager angeordnet ist. Aufgrund der paarigen und symmetrischen Anordnung der Hubeinrichtung und der Antriebsrolle ist ein besonders stabiler Halt der Antriebsrolle gegeben. Es wird eine äußerst gute und ausgewogene Lastverteilung erzielt, was zu einer langen Haltbarkeit der erfindungsgemäßen Rollenantriebseinheit führt. Im Gegensatz zu einer unsymmetrischen Anordnung wird bei der Erfindung beim Verschwenken des Rahmens zum Hochheben der Antriebsrolle vorteilhafterweise ein nur geringes Kippmoment erzeugt.

In einer vorteilhaften Ausgestaltung der Erfindung umfaßt die Hubeinrichtung zwei drehbar gelagerte Nockenscheiben, die jeweils über die Getriebeeinrichtung mit dem Rotor des Elektromotors verbunden sind. Mittels dieser Nockenscheiben kann auf besonders einfache Weise ein Hochheben der Antriebsrolle durchgeführt werden. Eine solche Nockenscheibe ist einfach herstellbar und trägt daher zu einer kostengünstigen Realisierung der Hubeinrichtung bei.

Die Nockenscheiben sind vorteilhafterweise drehfest mit dem ersten Ausgang der Getriebeeinrichtung verbunden. Dadurch wird ein besonders exaktes und zuverlässiges Hochheben der Antriebsrolle erreicht.

In einer weiteren vorteilhaften Ausgestaltung der erfindungsgemäßen Rollenantriebseinheit weist die Hubeinrichtung eine Rückholeinrichtung auf, die die Hubeinrichtung zum Absenken in die untere Ruhestellung beaufschlagt. Dadurch wird gewährleistet, daß die Antriebsrolle schnell und sicher in die Ruhestellung zurückgeholt wird. Diese Rückholeinrichtung ist vorteilhafterweise mittels Torsionsfedern realisiert, die jeweils einer Nockenscheibe zugeordnet sind.

In einer besonders vorteilhaften Ausgestaltung der Erfindung wird der Rahmen durch die Hubeinrichtung mit einer Hubkraft im Bereich von zwei Ebenen beaufschlagt, die jeweils im wesentlichen mittig durch eine der Teilantriebsrollen und senkrecht zu deren Achse verläuft. Durch diese Anordnung werden die Lastverteilung weiter verbessert und das erzeugte Kippmoment verringert.

Im folgenden werden die Erfindung und ihre Vorteile anhand von einem Ausführungsbeispiel und der Zeichnungen beschrieben. Es zeigen:
- Fig. 1: ein Ersatzschaltbild des Ausführungsbeispiels der erfindungsgemäßen Rollenantriebseinheit;
- Fig. 2: eine perspektivische Ansicht der Rollenantriebseinheit und
- Fig. 3: einen Horizontalschnitt durch die erfindungsgemäße Rollenantriebseinheit gemäß Fig. 2.

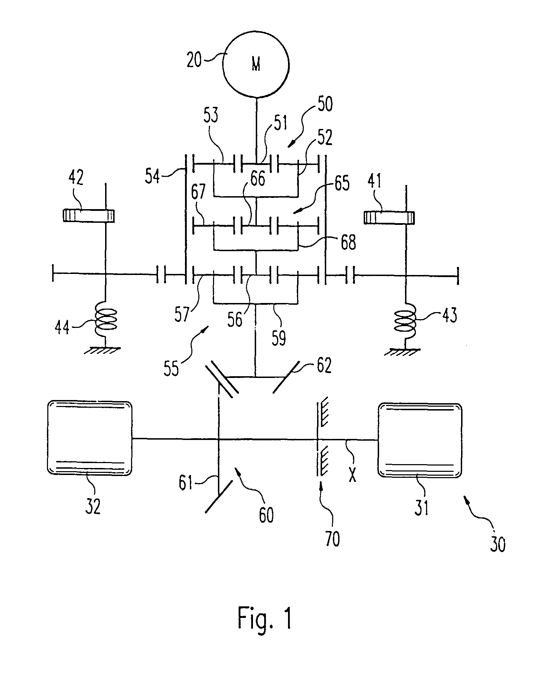

Fig. 1 zeigt ein Ersatzschaltbild eines Ausführungsbeispiels der erfindungsgemäßen Rollenantriebseinheit zur Beförderung von Gegenständen, wie z. B. Frachtcontainern, auf einer Förderbahn in einem Flugzeug.

Die Rollenantriebseinheit enthält einen Elektromotor 20, dessen Antriebswelle mit einem Eingang eines Hauptgetriebes 50 verbunden ist. Das Hauptgetriebe 50 ist hier mittels eines Planetengetriebes realisiert. Ein Sonnenrad 51 des Planetengetriebes ist an der Antriebswelle des Elektromotors 20 befestigt. Das Sonnenrad 51 kämmt mit Planetenrädern 53, die auf einem Planetenträger 52 drehbar befestigt sind und mit einem Hohlrad 54 des Hauptgetriebes 50 kämmen. Der Planetenträger 52 ist mit einem Sonnenrad 66 eines ersten Untersetzungsgetriebes 65 verbunden. Das Sonnenrad 66 kämmt mit Planetenrädern 67 des ersten Untersetzungsgetriebes 65. Die Planetenräder 67 sind drehbar auf einem Planetenträger 68 befestigt. Dieser Planetenträger 68 ist mit einem Sonnenrad 56 eines zweiten Untersetzungsgetriebes 55 verbunden. Das Sonnenrad 56 kämmt mit Planetenrädern 57 des zweiten Untersetzungsgetriebes 55, die auf einem Planetenträger 59 drehbar befestigt sind. Der Planetenträger 59 stellt einen zweiten Ausgang der aus dem Hauptgetriebe 50 und dem ersten und zweiten Untersetzungsgetriebe 65 und 55 gebildeten Getriebeanordnung dar. Die Hohlräder des ersten und zweiten Untersetzungsgetriebes 65 und 55 sind mit dem Hohlrad 54 des Hauptgetriebes 50 verbunden und stellen einen ersten Ausgang der Getriebeanordnung aus dem Hauptgetriebe 50 und dem ersten und zweiten Untersetzungsgetriebe 65 und 55 dar.

Der zweite Ausgang 59 der Getriebekombination aus dem Hauptgetriebe 50 und den Untersetzungsgetrieben 65 und 55 ist mit einem zweiten Kegelrad 62 eines Kegelgetriebes 60 verbunden. Ein erstes Kegelrad 61 des Kegelgetriebes 60 ist an einer Antriebswelle X einer Antriebsrolle 30 befestigt. Die Drehachse des Elektromotors 20 ist senkrecht zur Drehachse der Antriebsrolle 30 angeordnet. Zur Übertragung der Drehmomente zwischen Elektromotor 20 und Antriebsrolle 30 wird daher das Kegelgetriebe 60 verwendet, um zwischen der Eingangsdrehrichtung der Getriebeeinrichtung und ihrer Ausgangsdrehrichtung einen 90°-Winkel zu erzeugen.

Die Antriebswelle X der Antriebsrolle 30 wird in ansich bekannter Weise mittels einer Bremseinrichtung 70 (leicht) gebremst.

Die Antriebsrolle 30 ist erfindungsgemäß in ihrer Mitte in zwei Teilantriebsrollen 31 und 32 geteilt. Zwischen diesen beiden Teilantriebsrollen 31 und 32 sind das erste Kegelrad 61 des Kegelgetriebes 60 und die Bremseinrichtung 70 auf der Antriebswelle X der Antriebsrolle 30 angebracht.

Der erste Ausgang 54 der Getriebeanordnung, der durch die miteinander verbundenen Hohlräder gebildet wird, ist mit einer Hubeinrichtung verbunden, die durch die beiden Teilhubeinrichtungen 41 und 42 gebildet ist. Die beiden Teilhubeinrichtungen 41 und 42 sind symmetrisch zur Mitte der Antriebsrolle 30 angeordnet. Die Teilhubeinrichtungen 41 und 42 umfassen vorzugsweise jeweils eine drehbar gelagerte Nockenscheibe, die jeweils über ein Zahnrad, das mit den Hohlrädern 54 kämmt, und somit über das Planetengetriebe 50 mit einem Rotor des Elektromotors 20 verbunden sind.

Die Nockenscheiben der Teilhubeinrichtungen 41 und 42 dienen zum Anheben der Teilantriebsrollen 31 bzw. 32 von einer unteren Ruhestellung in eine obere Arbeitsstellung. Um zu gewährleisten, daß die in der oberen Arbeitsstellung befindlichen Teilantriebsrollen 31 und 32 in die Ruhestellung zurückholbar sind, weisen die Teilhubeinrichtungen 41 und 42 Rückstelleinrichtungen in Form von Torsionsfedern 43 bzw. 44 auf.

Wird nun der Elektromotor 20 eingeschaltet, so bremst gleichzeitig die Bremseinrichtung 70 den Planetenträger 52. Das von dem Elektromotor 20 über die Motorantriebswelle übertragene Drehmoment wird über das Sonnenrad 51 auf die Planetenräder 53 des Hauptgetriebes 50 und damit auf die mit dem Hohlrad 54 in Verbindung stehenden Teilhubeinrichtungen 41 und 42 übertragen. Dadurch wird bewirkt, daß die Teilantriebsrollen 31 und 32 aufgrund der Drehung der Nockenscheiben der Hubeinrichtung 41, 42 aus ihrer Ruhestellung in ihre obere Arbeitsstellung angehoben werden. Durch das Anheben der Teilantriebsrollen 31 und 32 werden die Rückstellfedern 43 bzw. 44 gegenüber den Nockenscheiben 41 und 42 vorgespannt. Haben die Nockenscheiben 41 und 42 ihren Endanschlag erreicht, so bewirkt dies ein Festhalten des Hohlrades 54. Das Drehmoment des Elektromotors 20 wird nun über den Planetenträger 52 auf die Drehachse X und damit auf die beiden Teilantriebsrollen 31 und 32 übertragen, die dann beginnen, sich zu drehen.

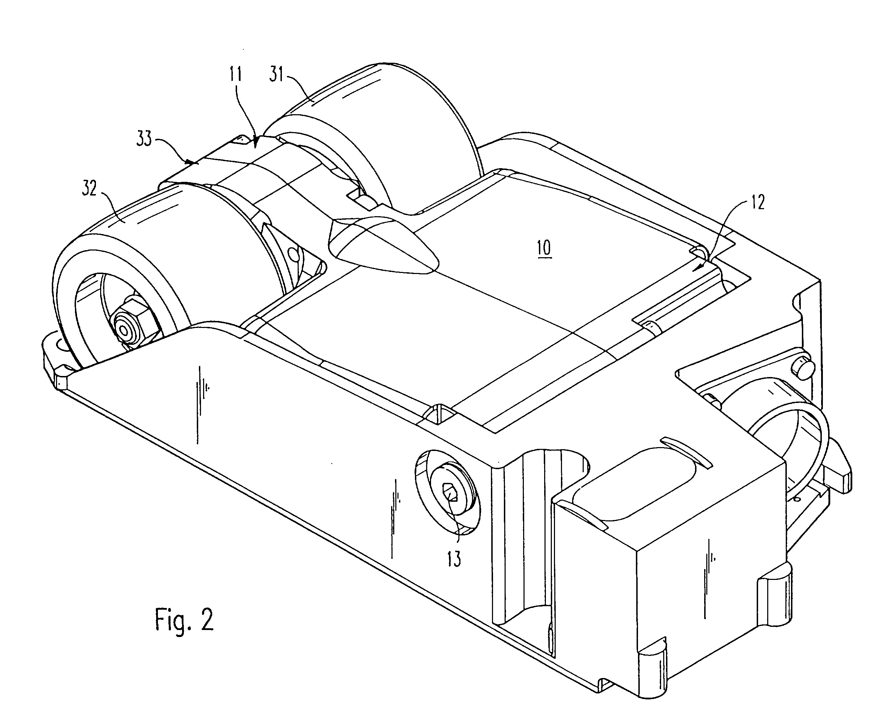

Fig. 2 zeigt eine perspektivische Ansicht der erfindungsgemäßen Rollenantriebseinheit, wie sie anhand des Ersatzschaltbildes gemäß Fig. 1 zuvor beschrieben wurde. Die Antriebsrolle 30 erstreckt sich im wesentlichen über die gesamte Breite eines Rahmens 10 der Rollenantriebseinheit. In Fig. 2 sind die beiden Teilantriebsrollen 31 und 32, in welche die Antriebsrolle 30 in ihrer Mitte geteilt ist, dargestellt. Die beiden Teilantriebsrollen 31 und 32 sind an einem ersten Ende 11 des Rahmens 10 drehbar gelagert. Diese Lagerung der beiden Teilantriebsrollen 31 und 32 findet in dem mittigen Bereich der Antriebsrolle 30 in einem Lager 33 statt, das in Fig. 2 nicht sichtbar ist. Die Drehachse X der Antriebsrolle 30 ist dabei parallel zu einer Schwenkachse 13 ausgerichtet, die sich an einem zweiten Ende 12 des Rahmens 10 befindet. Die Antriebsrolle 30 mit ihren Teilantriebsrollen 31 und 32 wird um diese Schwenkachse 13 geschwenkt, wenn sie sich von ihrer Ruhestellung in ihre obere Arbeitsstellung bewegt und umgekehrt. Der Elektromotor, die Bremseinrichtung, die Hubeinrichtung mit ihren Teilhubeinrichtungen, die Getriebeanordnungen, sowie die Rückstellfedern sind innerhalb des Rahmens 10 angeordnet. Aufgrund der Anordnung der Schwenkachse 13 an dem den Teilantriebsrollen 31 und 32 entgegengesetzten zweiten Ende 12 des Rahmens 10 werden der Elektromotor 20, die Getriebeanordnungen 50, 55, 65 und 60 beim Anheben der Teilantriebsrollen 31 und 32 mithochgeschwenkt.

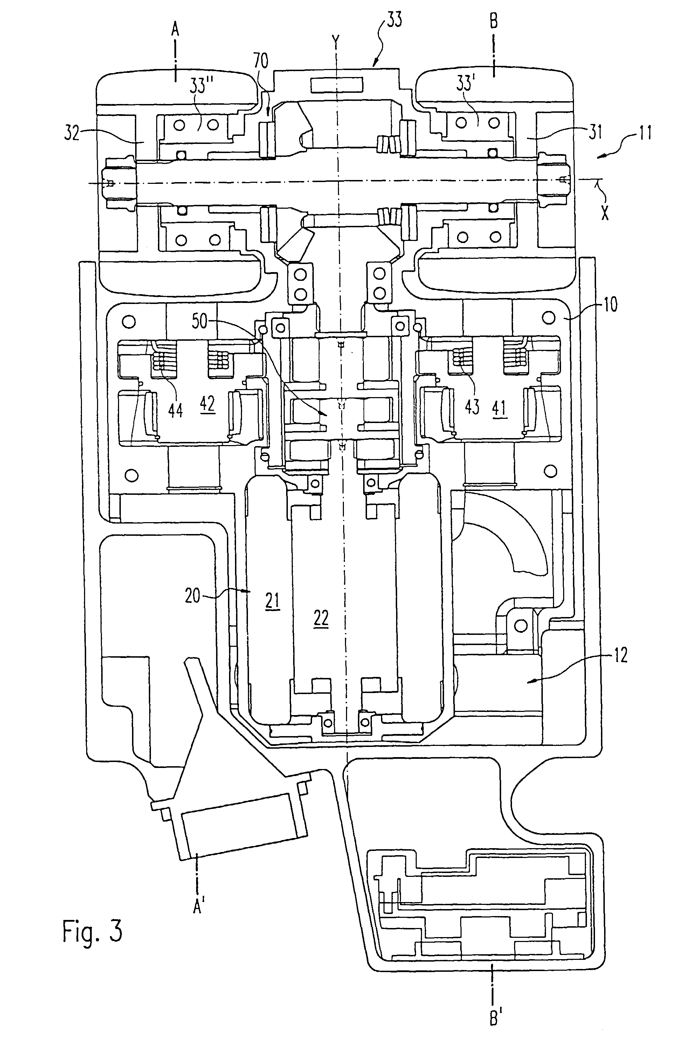

Fig. 3 zeigt einen Horizontalschnitt durch die Rollenantriebseinheit gemäß Fig. 2. Der Elektromotor 20 weist in der üblichen Weise einen Läufer 22 und einen Ständer 21 auf, der im Rahmen 10 fest gelagert ist. Die Drehachse des Läufers 22 ist längs der Förderrichtung der Förderbahn, und damit senkrecht zur Drehachse X der Antriebsrolle 30, ausgerichtet. Das Hauptgetriebe 50 ist konzentrisch zur Drehachse des Läufers 22 angeordnet. Dadurch ist es vorteilhafterweise möglich, einen sehr kompakten Aufbau der erfindungsgemäßen Rollenantriebseinheit zu erreichen. Durch diesen Aufbau wird insbesondere die Breite der Rollenantriebseinheit begrenzt. Dies ist bei einer Verwendung der Rollenantriebseinheit in einem Flugzeug vorteilhaft.

Aus Fig. 3 geht hervor, daß sich die Antriebsrolle 30 im wesentlichen über die gesamte Breite des Rahmens 10 erstreckt. Des weiteren zeigt Fig. 3, daß die beiden Teilantriebsrollen 31 und 32 symmetrisch zur Mitte der Antriebsrolle 30 in einem Lager 33, das in ein erstes Lager 33' und ein zweites Lager 33" aufgeteilt ist, am Rahmen 10 drehbar gehalten werden. Die beiden Nockenscheiben 41 und 42 der Hubeinrichtung sind bei der erfindungsgemäßen Rollenantriebseinheit gemäß Fig. 3 symmetrisch zur Mitte der Antriebsrolle 30 und zum Lager 33 angeordnet. Die beiden Nockenscheiben 41 und 42 befinden sich im vorliegenden Ausführungsbeispiel links und rechts von der Getriebeeinrichtung 50. Fig. 3 zeigt eine erste Ebene A-A' und eine zweite Ebene B-B', die jeweils im wesentlichen mittig zu einer der Teilantriebsrollen 31 und 32 und senkrecht zu deren Drehachse X verlaufen. Die beiden Nockenscheiben 41 und 42 der Hubeinrichtung sind dabei in der ersten bzw. zweiten Ebene A-A' bzw. B-B' angeordnet, so daß die Nockenscheiben 41 und 42 den Rahmen 10 im wesentlichen im Bereich dieser beiden Ebenen A-A' und B-B' mit einer Hubkraft beaufschlagen.

Aufgrund dieser symmetrischen Anordnung der beiden Teilantriebsrollen 31 und 32 und der beiden Nockenscheiben 41 und 42 werden eine besonders geeignete Lastverteilung und ein äußerst geringes Kippmoment der erfindungsgemäßen Rollenantriebseinheit erreicht.

## Patentansprüche

1. Rollenantriebseinheit zum Antrieb von Gegenständen auf einer Förderbahn, umfassend
- einen Rahmen (10), an dessen erstem Ende (11) eine mittels eines Elektromotors (20) mit Stator (21) und Rotor (22) um eine Achse (X) drehbare Antriebsrolle (30) gelagert ist, wobei die Achse (X) der Antriebsrolle (30) senkrecht zu einer Drehachse (Y) des Rotors (22) angeordnet ist;
- eine Hubeinrichtung (41, 42) zum Verschwenken des Rahmens (10) um eine an seinem zweiten Ende (12) angeordnete, zur Achse (X) der Antriebsrolle (30) parallele Schwenkachse (13) und zum Hochheben der Antriebsrolle (30) von einer unteren Ruhestellung in eine obere Arbeitsstellung;
- eine Getriebeeinrichtung (50), die einen mit dem Elektromotor (20) verbundenen Eingang (51) und zwei Ausgänge (52, 54) aufweist, von denen ein erster Ausgang (54) zum Antrieb der Hubeinrichtung (40) mit dieser und von denen ein zweiter Ausgang (52) zum Antrieb der Antriebsrolle (30) mit dieser verbunden ist;
**dadurch gekennzeichnet**, daß
- die Antriebsrolle (30), sich im wesentlichen über die gesamte Breite des Rahmens (10) erstreckend ausgebildet, in ihrer Mitte in zwei Teilantriebsrollen (31, 32) geteilt und in diesem Bereich in einem Lager (33) am Rahmen (10) drehbar gehalten ist, und
- die Hubeinrichtung (41, 42) paarig ausgebildet und symmetrisch zur Mitte der Antriebsrolle (30) und zum Lager (33) angeordnet ist.

2. Rollenantriebseinheit nach Anspruch 1,
**dadurch gekennzeichnet**, daß
die Hubeinrichtung (41, 42) zwei drehbar gelagerte Nockenscheiben (41, 42) umfaßt, die jeweils über die Getriebeeinrichtung (50) mit dem Rotor (22) verbunden sind.

3. Rollenantriebseinheit nach Anspruch 2,
**dadurch gekennzeichnet**, daß
die Nockenscheiben (41, 42) drehfest und mit dem ersten Getriebeausgang (52) verbunden sind.

4. Rollenantriebseinheit nach einem der Ansprüche 2 oder 3,
**dadurch gekennzeichnet**, daß
eine Rückholeinrichtung (43, 44) vorgesehen ist, welche die Hubeinrichtung (41, 42) zum Absenken in die untere Ruhestellung beaufschlagt.

5. Rollenantriebseinheit nach Anspruch 4,
**dadurch gekennzeichnet**, daß
die Hubeinrichtung (41, 42) Torsionsfedern (43, 44) umfaßt, die jeweils Nockenscheiben (41, 42) zugeordnet sind.

6. Rollenantriebseinheit nach einem der vorhergehenden Ansprüche,
**dadurch gekennzeichnet**, daß
die Hubeinrichtung (41, 42) den Rahmen (10) im wesentlichen im Bereich von zwei Ebenen (A-A'; B-B') mit einer Hubkraft beaufschlagen, die jeweils im wesentlichen mittig durch eine Teilantriebsrolle (31, 32) und senkrecht zu deren Achse (X) verläuft.

## Claims

1. Roller drive unit to propel objects on a conveyor track, comprising
- a frame (10) at a first end (11) of which is mounted a drive roller (30) that can be rotated about an axis (X) by means of an electric motor (20) with stator (21) and rotor (22), such that the axis (X) of the drive roller (30) is disposed perpendicular to an axis of rotation (Y) of the rotor (22);
- a lifting mechanism (41, 42) to swivel the frame (10) about an axis of rotation (13) disposed at its second end (12) in parallel with the axis (X) of the drive roller (30), and thus to raise the drive roller (30) from a lower, resting position into an upper, operating position;
- a gear unit (50) that comprises one input (51) connected to the electric motor (20) and two outputs (52, 54), of which a first output (54) is connected to the lifting mechanism (40) in order to power it, and of which a second output (52) is connected to and powers the drive roller (30);
characterized in that
- the drive roller (30), so constructed that it extends substantially across the entire width of the frame (10), is divided in the middle to form two drive-roller components (31, 32) and in this region is rotatably mounted on the frame (10) in a bearing (33), and
- the lifting mechanism (41, 42) has the form of paired structures disposed symmetrically about the middle of the drive roller (30) and about its bearing (33).

2. Roller drive unit according to Claim 1,
characterized in that the lifting mechanism (41, 42) comprises two rotatably mounted cam disks (41, 42), each of which is connected to the rotor (22) by way of the gear unit (50).

3. Roller drive unit according to Claim 2,
characterized in that the cam disks (41, 42) are connected in a torsionally stable manner to the first output (52) of the gear unit.

4. Roller drive unit according to one of the claims 2 or 3,
characterized in that a retraction device (43, 44) is provided, which acts on the lifting mechanism (41, 42) to retract it into its lower, resting position.

5. Roller drive unit according to Claim 4,
characterized in that the lifting mechanism (41, 42) comprises torsion springs (43, 44), each of which is associated with one of the cam disks (41, 42).

6. Roller drive unit according to one of the preceding claims,
characterized in that the lifting mechanism (41, 42) exerts a lifting force on the frame (10) substantially in the region of two planes (A-A'; B-B'), each of which passes substantially through the middle of one of the drive-roller components (31, 32) and is perpendicular to its axis (X).

## Revendications

1. Unité d'entraînement à rouleaux pour l'entraînement d'objets sur un convoyeur, comportant
- un châssis (10), sur la première extrémité (11) duquel est monté un rouleau moteur (30) rotatif autour d'un axe (X) au moyen d'un moteur électrique (20) muni d'un stator (21) et d'un rotor (22), l'axe (X) du rouleau moteur (30) étant disposé perpendiculairement à un axe de rotation (Y) du rotor (22) ;
- un dispositif de levage (41, 42) pour faire pivoter le châssis (10) autour d'un axe de pivotement (13) disposé sur sa seconde extrémité (12) et parallèle à l'axe (X) du rouleau moteur (30), et pour relever le rouleau moteur (30) d'une position de repos inférieure dans une position de travail supérieure ;
- un système de transmission (50), qui présente une entrée (51) reliée au moteur électrique (20) et deux sorties (52, 54), dont une première sortie (54) est reliée au dispositif de levage (40) pour l'entraînement de ce dernier, et dont une seconde sortie (52) est reliée au rouleau moteur (30) pour l'entraînement de ce dernier ;
caractérisée en ce que
- le rouleau moteur (30) s'étend essentiellement sur toute la largeur du châssis (10), est partagé en son centre en deux rouleaux moteurs partiels (31, 32), et est maintenu en rotation dans cette zone sur le châssis (10) dans un palier (33), et
- le dispositif de levage (41, 42) a une réalisation appariée et est disposé symétriquement par rapport au centre du rouleau moteur (30) et au palier (33).

2. Unité d'entraînement à rouleaux suivant la revendication 1, caractérisée en ce que le dispositif de levage (41, 42) comprend deux disques à cames (41, 42) montés en rotation, qui sont respectivement reliés au rotor (22) par l'intermédiaire du système de transmission (50).

3. Unité d'entraînement à rouleaux suivant la revendication 2, caractérisée en ce que les disques à cames (41, 42) sont assemblés de façon solidaire avec la première sortie (52) de la transmission.

4. Unité d'entraînement à rouleaux suivant l'une des revendications 2 et 3, caractérisée en ce qu'est prévu un dispositif de rappel (43, 44), qui sollicite le dispositif de levage (41, 42) pour l'abaissement dans la position de repos inférieure.

5. Unité d'entraînement à rouleaux suivant la revendication 4, caractérisée en ce que le dispositif de levage (41, 42) comporte des ressorts à torsion (43, 44), qui sont respectivement associés aux disques à cames (41, 42).

6. Unité d'entraînement à rouleaux suivant l'une des revendications précédentes, caractérisée en ce que le dispositif de levage (41, 42) sollicite par une force de levage le châssis (10) essentiellement dans la zone de deux plans (A-A' ; B-B'), qui passent respectivement et essentiellement au centre d'un rouleau moteur partiel (31, 32) et se situent perpendiculairement à l'axe (X) de ces derniers.
